# EUROPÄISCHE PATENTSCHRIFT

(11) **EP 0 327 498 B1**
(45) Veröffentlichungstag und Bekanntmachung des Hinweises auf die Patenterteilung: **18.01.1995**
(21) Anmeldenummer: 89810058.1
(22) Anmeldetag: 24.01.1989
(51) Int. Cl.: C08G 65/40, C08G 75/23, C08J 5/24, C08G 65/48, C08G 59/04, C08L 71/00, C08L 63/00, C08G 73/12

(54) **Polyethersulfon- oder Polyetherketon-Copolymere**
Polyethersulfone- or Polyetherketone-Copolymers
Copolymères de Polyéthercétone ou Polyéthersulfone

(30) Priorität: 01.02.1988 CH 337/88
(43) Veröffentlichungstag der Anmeldung: 09.08.1989
(73) Patentinhaber: CIBA-GEIGY AG, 4002 Basel (CH)
(72) Erfinder: Stockinger, Friedrich, CH-1784 Courtepin (CH)

(56) Entgegenhaltungen:
- EP-A- 0 067 976
- EP-A- 0 106 023
- EP-A- 0 210 136
- EP-A- 0 243 831
- US-A- 4 634 742

## Beschreibung

Die vorliegende Erfindung betrifft neue härtbare Polyethersulfon- oder Polyetherketon-Copolymere.

Polyetherharze weisen, wie auch andere Thermoplaste, neben den bekannten technischen Vorteilen vor allem die Nachteile auf, dass sie unter Last bei erhöhten Temperaturen ein ausgesprochenes Kriechverhalten zeigen und ferner gegenüber organischen Lösungsmitteln ungenügend beständig sind.

Es hat nicht an Versuchen gefehlt, diese Mängel durch Vernetzung der Polyetherharze zu beheben, indem man Polyetherpolymere mit reaktiven, die Vernetzung bewirkenden Endgruppen, verkappt.

Als solche Endgruppen werden beispielsweise in der EP-A-67,976 die Maleinimidyl-, Nadicimidyl- oder Ethinylgruppen offenbart.

Aus der US-A-4,634,742 sind Polyarylenether bekannt, die im Polymergerüst wenigstens zwei Ethenyl- oder Ethinylgruppen tragen und die noch Endgruppen dieses Typs besitzen.

Es wurden jetzt ausgewählte Copolyethersulfone bzw. -ketone gefunden, die sich allein oder zusammen mit bestimmten ungesättigten Imiden zu gehärteten Produkten verarbeiten lassen. Diese Produkte vereinen wünschenswerte Thermoplasteigenschaften, wie hohe Schlagzähigkeit und Biegefestigkeit, und wünschenswerte Duroplasteigenschaften, wie hohe Glasübergangstemperaturen und gute Lösungsmittelbeständigkeit, miteinander.

Die vorliegende Erfindung betrifft Copolyetherharze mit direkt an Phenylkerne gebundenen Endgruppen -OR¹ und 1 bis 50 Mol % an wiederkehrenden Struktureinheiten der Formel I und 99 bis 50 Mol % an wiederkehrenden Struktureinheiten der Formel II, wobei die Prozentangaben sich jeweils auf die Gesamtzahl an wiederkehrenden Stuktureinheiten pro Molekül beziehen 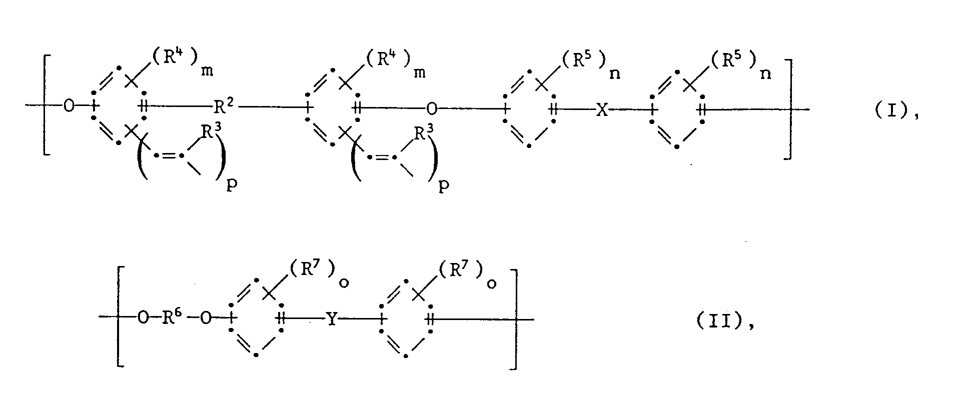
worin R¹ Wasserstoff ist oder einen Rest der Formel IV darstellt 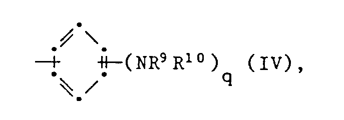
R² eine direkte C-C-Bindung ist oder eine Gruppe der Formeln -CᵣH₂ᵣ-, -O-, -S-, -CO- oder -SO₂- bedeutet,
r 1 bis 20 ist,
R³ Wasserstoff oder Methyl bedeutet,
R⁴, R⁵ und R⁷ unabhängig voneinander C₁-C₄Alkyl, C₁-C₄Alkoxy oder Chlor oder Brom sind, m, n und o unabhängig voneinander 0, 1 oder 2 bedeuten, p 1 oder 2 ist,
R⁶ ein zweiwertiger unsubstituierter oder mit ein oder zwei C₁-C₄Alkyl-, C₁-C₄Alkoxygruppen oder Chlor- oder Bromatomen substituierter Rest eines Bisphenols nach dem Entfernen beider phenolischer Hydroxylgruppen ist,
X und Y unabhängig voneinander -CO- oder -SO₂- bedeuten,
R⁹ und R¹⁰ Wasserstoff sind und q 1 ist.

Diese Copolyetherharze lassen sich als Zwischenprodukte einsetzen und zur Herstellung härtbarer Zusammensetzungen verwenden, die zusätzlich mindestens eine Verbindung der Formeln IXa, IXb oder IXc enthalten 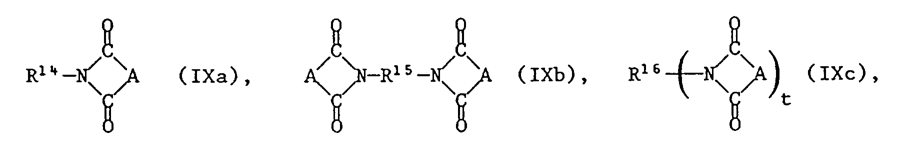
worin A eine gruppe der Formeln VII oder VIII ist

-CH=CH- (VII),

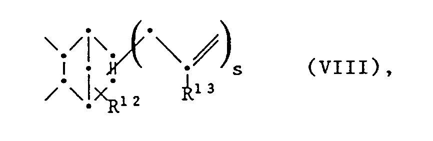

worin R¹² und R¹³ unabhängig voneinander Wasserstoff oder Methyl sind und s O, 1 oder 2 bedeutet, und t eine ganze Zahl von 3 bis 12 ist,
R¹⁴ C₁-C₂₀Alkyl, C₅-C₁₂Cycloalkyl, C₆-C₁₈Aryl, C₇-C₂₀Aralkyl oder ein C₄-C₁₈Heterocyclus mit ein oder zwei N-, O- oder S-Atomen ist,
R¹⁵ C₂-C₂₀Alkylen, C₅-C₁₂Cycloalkylen, C₆-C₁₈Arylen, C₇-C₂₀Aralkylen oder ein zweiwertiger C₄-C₁₈heterocyclischer Rest mit ein oder zwei N-, O- oder S-Atomen ist und
R¹⁶ ein t-wertiger Rest eines aromatischen Polyamins nach dem Entfernen der t Aminogruppen ist.

Die Copolyetherharze können aber auch als solche vernetzt werden. Die Erfindung betrifft daher auch die Verwendung der Copolyetherharze zur Herstellung vernetzter Produkte.

Der Index p ist vorzugsweise 1 und der Index r ist bevorzugt 1 bis 6, besonders bevorzugt 1.

R² ist vorzugsweise -CH₂-, -C(CH₃)₂-, -O- oder -S-.

R³ ist bevorzugt Wasserstoff.

Die Reste -CH=C(R³)-CH₃ in Formel I befinden sich vorzugsweise jeweils in ortho-Position zum betreffenden phenolischen O-Atom.

R⁴, R⁵ und R⁷ sind als C₁-C₄Alkyl geradkettig oder verzweigt. Beispiele dafür sind Methyl, Ethyl, n-Propyl, Isopropyl oder n-Butyl. Bevorzugt wird Methyl.

R⁴, R⁵ und R⁷ als C₁-C₄Alkoxy sind geradkettig oder verzweigt. Beispiele dafür sind Methoxy, Ethoxy, n-Propoxy, Isopropoxy oder n-Butoxy. Bevorzugt wird Methoxy.

Die Indizes m, n und o sind vorzugsweise 0.

R⁶ ist als zweiwertiger Rest eines Bisphenols in der Regel der zweiwertige Rest eines ein- oder mehrkeringen carbocyclisch-aromatischen Phenols, insbesondere der Rest eines ein- oder zweikernigen carbocyclisch-aromatischen Phenols, wobei die beiden aromatischen Kerne kondensiert oder über eine Brückengruppe miteinander verbunden sind.

Bevorzugte Reste R⁶ entsprechen den Formeln X bis XII 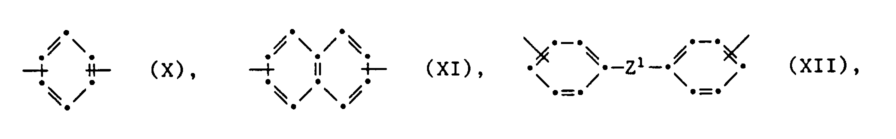
worin Z¹ eine direkte C-C-Bindung ist oder eine Gruppe der Formeln -CᵣH₂ᵣ- ist, worin r die oben definierte Bedeutung besitzt, -O-, -S-, -SO₂-, -CO-, -C(CF₃)₂-, -CH(C₆H₅)-, -P(O)R¹⁷- oder eine Gruppe der Formeln XIII oder XIV ist 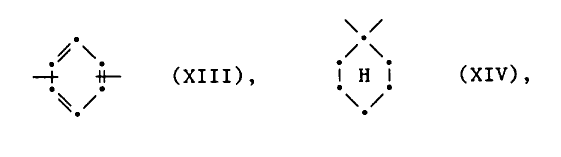
und R¹⁷ Methyl, Cyclohexyl oder Phenyl ist.

Ganz besonders bevorzugte Reste R⁶ entsprechen den Formeln X, XI und XII, worin Z¹ eine direkte C-C-Bindung ist oder eine Gruppe der Formeln -CH₂-, -CHCH₃-, -C(CH₃)₂-, -CH(C₂H₅)-, -C(CH₃)(C₂H₅)-, -C(CF₃)₂-, -O-, -S-, -SO₂- oder -P(O)R¹⁷- ist.

X und Y haben vorzugsweise die gleiche Bedeutung.

A ist insbesondere ein Rest der Formel VII oder ein Rest der Formel VIII, worin s 1 bedeutet.

R¹² und R¹³ sind bevorzugt Wasserstoff und s ist vorzugsweise 1 oder 2, insbesondere 1.

Bevorzugt werden Copolyetherharze, worin m, n und o 0 sind und p und q 1 bedeuten.

Ferner werden Copolyetherharze bevorzugt, worin X und Y jeweils die gleiche Bedeutung besitzen.

Ganz besonders bevorzugt werden Copolyetherharze bestehend aus 2 bis 30 Mol %, insbesondere 5 bis 20 Mol %, an wiederkehrenden Struktureinheiten der Formel I und aus 98 bis 70 Mol %, vorzugsweise 95 bis 80 Mol %, an wiederkehrenden Struktureinheiten der Formel II und mit einem mittleren Molekulargewicht (Zahlenmittel) von 2000 bis 30000, vorzugsweise von 5000 bis 20000.

Die erfindungsgemässen Copolyetherharze mit Hydroxylendgruppen können erhalten werden, indem man Verbindungen der Formeln XV und/oder XVI und der Formeln XVII bis XIX, in einem polaren, aprotischen Lösungsmittel in Gegenwart einer Base umsetzt 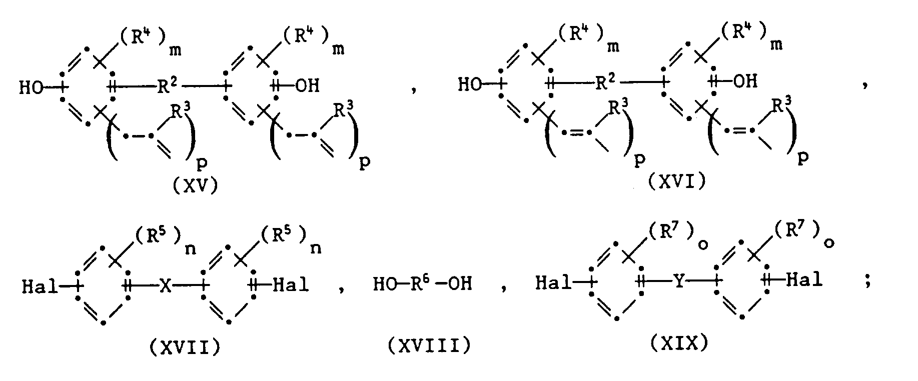
dabei haben die Reste R² bis R⁷, X und Y, sowie die Indizes m, n, o und p die weiter oben definierte Bedeutung und Hal ist ein Fluor-, Chlor-, Brom- oder Iodatom, bevorzugt ein Chloratom bei Sulfonen und ein Fluoratom bei Ketonen.

Setzt man eine Verbindung der Formel XV ein, so erfolgt während der Reaktion eine Isomerisierung zum entsprechenden 1-Propenylderivat. Zur Herstellung der hydroxyl-terminierten Copolyetherharze (R¹ = Wasserstoff) sind die Mengenverhältnisse der Bisphenol- zu den Dihalogenverbindungen dabei in an sich bekannter Weise zu wählen, so dass ein geringer stöchiometrischer Ueberschuss an Bisphenolkomponenten vorliegt. Das molare Verhältnis der Verbindungen XV/XVII bzw. XVI/XVII zu den Verbindungen XVIII/XIX beträgt im allgemeinen 1:99 bis 1:1.

Man kann allerdings auch die Dihalogenverbindungen in geringerem stöchiometrischen Ueberschuss vorlegen und die erhaltenen halogenterminierten Copolyetherharze anschliessend durch Umsetzung mit einem Alkalimetallhydroxid, wie Natronlauge modifizieren.

Als Lösungsmittel setzt man im allgemeinen polare, aprotische Verbindungen ein, beispielsweise Dimethylformamid oder Dimethylacetamid.

Als Basen eignen sich insbesondere anorganische Basen, wie NaOH, KOH oder K₂CO₃.

Die Umsetzung der Bisphenole mit den aromatischen Dihalogenverbindungen zu Polyarylenethern ist an sich bekannt und beispielsweise in der EP-A 106,023 beschrieben.

Wünscht man endgruppenverkappte Copolyetherharze (R¹ ≠ Wasserstoff), so lassen sich diese vorteilhafterweise in einer Eintopfreaktion herstellen. Dies ist beispielsweise in der oben erwähnten EP-A-67,976 beschrieben.

Dazu legt man die entsprechenden Dihalogenverbindungen der Formeln XVII und XIX in geringem stöchiometrischen Ueberschuss zusammen mit den Bisphenolen der Formeln XV und/oder XVI und XVIII vor und setzt diese gleichzeitig mit dem Monophenol der Formel XXI um, so dass die entstehenden dihalogen-terminierten Polymeren mit besagten Monophenolen verkappt werden können 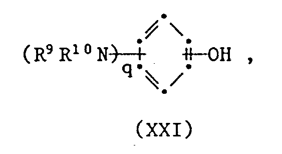
dabei besitzen die Reste R⁹ und R¹⁰ sowie der Index q die weiter oben definierte Bedeutung.

Glycidyl-terminierte Copolyetherharze erhält man in an sich bekannter Weise durch Umsetzung der entsprechenden hydroxyl-terminierten Polymeren mit Epichlorhydrin oder mit β-Methylepichlorhydrin in Gegenwart von Basen.

Die Zwischenprodukte der Formeln XV bis XIX sind an sich bekannt oder können nach an sich bekannten Verfahren erhalten werden.

So lassen sich die 1-Propenylderivate der Formel XVI aus den entsprechenden (Meth)allylderivaten der Formel XV durch alkalische Isomerisation herstellen. Beispiele für solche Reaktionen findet man in der EP-A-14,816.

Die (Meth)allylderivate der Formel XV lassen sich aus den entsprechenden (Meth)allylethern der Bisphenole durch Claisen Umlagerung erhalten. Beispiele für solche Reaktionen findet man ebenfalls in der EP-A-14,816.

Die Bisphenole der Formel XVIII und die Dihalogenverbindungen der Formeln XVII und XIX sind teilweise im Handel erhältlich. Diese Verbindungen sind als Aufbaukomponenten für Polyarylenether bereits bekannt und beispielsweise in der EP-A-106,023 beschrieben.

Das funktionalisierte Monophenol der Formel XII ist ebenfalls an sich bekannt.

Die Verbindungen der Formeln IXa bis IXc sind ebenfalls an sich bekannt und teilweise im Handel erhältlich.

Die Herstellung der Maleinimidylverbindungen der Formeln IXa bis IXc kann beispielsweise in Analogie zu den in der US-A-3,522,271 beschriebenen Methoden erfolgen.

Maleinimidylverbindungen der Formel IXc sind beispielsweise in der DE-A-2,230,874 beschrieben.

Die entsprechenden Bicyclo[2.2.1]hept-5-en-2,3-dicarbonsäureimidderivate oder die allyl- oder methallylsubstituierten Derivate dieses Typs können in Analogie zu den Maleinimidylverbindungen erhalten werden, indem man anstelle von Maleinsäureanhydrid die entsprechenden Bicyclo[2.2.1]hept-5-en-2,3-dicarbonsäureanhydride einsetzt.

Verbindungen dieses Typs sind beispielsweise aus der US-A-4,515,962 bekannt.

Ein besonderer Vorteil der erfindungsgemässen Copolyetherharze ist darin zu sehen, dass diese als solche oder zusammen mit ungesättigten Imiden der Formeln IXa bis IXc in der für Thermoplasten üblichen Weise eingesetzt und verarbeitet werden können und nach der Härtung die für Duroplaste charakteristischen Eigenschaften, wie hohe Festigkeit und Glasübergangstemperaturen, aufweisen. Die Erfindung betrifft auch die Verwendung der Copolyetherharze zur Herstellung vernetzter Produkte.

Die härtbaren Copolyetherharze oder Zusammensetzungen enthaltend diese Verbindungen können beispielsweise als Press-, Ueberzugs- oder Beschichtungsmassen oder zur Herstellung von Filmen Verwendung finden. Vor dem Applizieren können den als Presspulver, Schmelzen oder Lösungen in einem üblichen organischen Lösungsmittel vorliegenden Polyetherharzen die üblichen Zusatzstoffe, wie beispielsweise Füllstoffe, Pigmente, Stabilisatoren oder Verstärkungsmittel, wie Kohlenstoff-, Bor- oder Glasfasern, zugegeben werden. Die härtbaren Copolyetherharze oder Zusammensetzungen enthaltend diese Verbindungen können auch zusammen mit anderen Thermoplasten, wie beispielsweise Polyestern, Polyamiden, Polyimiden, Polyolefinen oder Polyurethanen, insbesondere mit den konventionellen Polyetherharzen, verarbeitet werden.

Vorzugsweise eignen sich die härtbaren Copolyetherharze oder Zusammensetzungen enthaltend diese Verbindungen als Matrixharze für die Herstellung von Faserverbundsystemen, wobei man als Verstärkungsfasern die üblichen bei der Faserverstärkung von Werkstoffen verwendeten Fasern einsetzen kann. Diese können organische oder anorganische Fasern, Naturfasern oder Synthesefasern, wie Aramid-Fasern, sein und als Faserbündel oder Endlosfasern vorliegen. Beispielsweise verwendet man als Verstärkungsfasern Glas-, Asbest-, Bor-, Kohlenstoff- und Metallfasern, vorzugsweise Kohlenstoff- und Metallfasern. Solche Fasern und Gewebe daraus sind im Handel erhältlich.

Wie eingangs erwähnt, können die härtbaren Copolyetherharze oder Zusammensetzungen enthaltend diese Verbindungen zu Produkten mit vorteilhaften Eigenschaften vernetzt werden. Im Falle einer thermischen Vernetzung kann diese in Gegenwart von Sauerstoff oder, nach vorheriger Oxidation mittels Sauerstoffbehandlung, auch unter anaeroben Bedingungen, z.B. in der Laminierpresse, erfolgen.

Die Temperaturen bei der thermischen Vernetzung betragen im allgemeinen 220-350°C, vorzugsweise 250-300°C.

Die thermische Vernetzung kann gegebenenfalls in Gegenwart von Radikalbildnern, z.B. anorganischen oder organischen Peroxiden, wie Kaliumperoxidsulfat oder Benzoylperoxid, Azoverbindungen, wie Azoisobutyronitril, organischen Hydroperoxiden, wie Cumolhydroperoxid oder tert.-Butylhydroperoxid, α-Halogenacetophenon, Benzoin oder dessen Ethern, Benzophenon, Benzpinakol, Benzilacetalen, Anthrachinonen, Arsinen, Phosphinen, Thioharnstoffen, Redox-Initiatorsystemen, anaerobischen Initiatorsystemen oder Metallsalzen vorgenommen werden.

Im Falle einer Vernetzung der erfindungsgemässen härtbaren Copolyetherharze oder Zusammensetzungen enthaltend diese Verbindungen mittels aktinischer Strahlung kann diese zum Beispiel mit Röntgenstrahlen, beschleunigten Elektronen, von einer ⁶⁰Co-Quelle ausgesandten γ-Strahlen oder mit UV-Strahlen vorgenommen werden.

Die folgenden Beispiele erläutern die Erfindung.

### A) Herstellungsbeispiele

Beispiel 1: In einem 6 Liter Sulfierkolben, ausgerüstet mit Flügelrührer, Thermometer, Wasserabscheider, Intensivkühler und Gaseinleitungsrohr, werden 439,9 g (1,532 Mol) 4,4'-Dichlordiphenylsulfon, 297,2 g (1,302 Mol) 2,2-Bis-(4-hydroxyphenyl)-propan, 94,4 g (0,306 Mol) 2,2-Bis-(3-allyl-4-hydroxyphenyl)-propan, 254,3 g (1,84 Mol) wasserfreies, pulverisiertes Kaliumcarbonat, 2,5 ℓ Dimethylacetamid und 1 ℓ Xylol 2 Stunden lang bei 146°C zur Reaktion gebracht und das entstehende Reaktionswasser laufend azeotrop ausgekreist. Anschliessend wird solange Lösungsmittel abdestilliert bis die Innentemperatur 150°C erreicht hat. Dann lässt man 20 Stunden lang bei dieser Temperatur weiter reagieren und destilliert anschliessend nochmals Lösungsmittel ab, bis die Innentemperatur auf 157°C angestiegen ist. Nach weiteren 65 Minuten Reaktionsdauer werden 2 ℓ Dimethylacetamid zugegeben, das Reaktionsgemisch auf Raumtemperatur abgekühlt und dann in 15 ℓ Wasser unter intensivem Rühren mit einem Turbomischer ausgefällt. Der Niederschlag wird abgesaugt, mit Wasser gut gewaschen und im Vakuum bei 100°C getrocknet. Man erhält 713,8 g (99,1 % d. Theorie) eines farblosen Pulvers, das in Methylenchlorid klar löslich ist.

Analytische Daten:
Gelchromatographie: Mₙ = 6954; M_{w} = 30082; M_{w}/Mₙ = 4,32.

Glasumwandlungstemperatur (T_{g} onset, TMA): 115°C.

| Elementaranalyse: | |
|---|---|
| berechnet | gefunden |
| 6,82 % S | 6,79 % S. |

Beispiel 2: Analog Beispiel 1 werden 458,38 g (1,596 Mol) 4,4'-Dichlordiphenylsulfon, 260,22 g (1,14 Mol) 2,2-Bis-(4-hydroxyphenyl)-propan, 164,42 g (0,532 Mol) 2,2-Bis(3-allyl-4-hydroxyphenyl)-propan, 254,0 g (1,84 Mol) wasserfreies, pulverisiertes Kaliumcarbonat, 2,5 ℓ Dimethylacetamid und 1 ℓ Xylol zur Reaktion gebracht und wie in Beispiel A1) beschrieben aufgearbeitet. Es werden 750,2 g (97,9 % der Theorie) eines farblosen Polysulfons erhalten und das in Methylenchlorid klar löslich ist.

Analytische Daten:
Gelchromatographie: Mₙ = 7395; M_{w} = 36393; M_{w}/Mₙ = 4,92.

Glasumwandlungstemperatur (T_{g} onset, TMA): 107°C.

| Elementaranalyse: | |
|---|---|
| berechnet | gefunden |
| 6,5 % S | 6,68 % S. |

Beispiel 3: 215,0 g (0,75 Mol) 4,4'-Dichlordiphenylsulfon, 126,3 g (0,625 Mol) 4,4'-Dihydroxydiphenylether, 77,0 g (0,25 Mol) 2,2-Bis-(3-allyl-4-hydroxyphenyl)-propan, 124,3 g (0,90 Mol) Kaliumcarbonat wasserfrei, 1000 ml Dimethylacetamid und 500 ml Xylol werden, wie in Beispiel 1 beschrieben, 51 Stunden und 45 Minuten lang bei 141°C - 159°C umgesetzt und aufgearbeitet.

Es werden 355,4 g (97,6 % der Theorie) eines hellbraunen Polysulfons erhalten.

Analytische Daten:
Gelchromatografie: Mₙ = 4607; M_{w} = 13253; M_{w}/Mₙ = 2,88.

Wasserstoffaufnahme: 1,2 mMol/g.

Beispiel 4: 215,0 g (0,75 Mol) 4,4'-Dichlordiphenylsulfon, 144,6 g (0,675 Mol) 4,4'-Dihydroxybenzophenon, 46,2 g (0,15 Mol) 2,2-Bis-(3-allyl-4-hydroxyphenyl)-propan, 124,3 g (0,9 Mol) Kaliumcarbonat wasserfrei, 1300 ml Dimethylacetamid und 500 ml Xylol werden gemäss Beispiel 1 zur Reaktion gebracht und analog aufgearbeitet.

Man erhält 350,8 g (99,9 % der Theorie) eines Polysulfons mit folgenden Analysendaten:
Gelchromatographie: Mₙ = 3133; M_{w} = 8995; M_{w}/Mₙ = 2,87.

Beispiel 5: 229,2 g (0,798 Mol) 4,4'-Dichlordiphenylsulfon, 125,7 g (0,551 Mol) 2,2-Bis-(4-hydroxyphenyl)-propan, 82,2 g (0,266) 2,2-Bis-(3-allyl-4-hydroxyphenyl)-propan, 132,2 g (0,9576 Mol) wasserfreies Kaliumcarbonat in 1300 ml Dimethylacetamid und 500 ml Xylol werden gemäss Beispiel 1 47 Stunden und 50 Minuten lang bei 147-160°C zur Reaktion gebracht und aufgearbeitet.

Man erhält 373,2 g (98,5 % der Theorie) eines farblosen Polysulfons, das in Methylenchlorid klar löslich ist.

Analytische Daten:
Gelchromatographie: Mₙ = 10399; M_{w} = 46356; M_{w}/Mₙ = 4,457.

| Elementaranalyse: | |
|---|---|
| berechnet | gefunden |
| 6,75 % S | 6,71 % S |

Beispiel 6: Analog Beispiel 1 werden 51,92 g (0,2378 Mol) 4,4'-Difluorbenzophenon, 50,25 g (0,2201 Mol) 2,2-Bis-(4-hydroxyphenyl)-propan, 7,34 g (0,0238 Mol) 2,2-Bis-(3-allyl-4-hydroxyphenyl)-propan und 39,47 g (0,2855 Mol) wasserfreies Kaliumcarbonat in 450 ml Dimethylacetamid und 189 ml Xylol 16 Stunden und 5 Minuten lang bei 144-150°C umgesetzt. Es wird gemäss Beispiel 1 aufgearbeitet und man erhält 96,2 g (96,2 % der Theorie) eines farblosen Polyetherketons.

Gelchromatographie: Mₙ = 12184; M_{w} = 47782; M_{w}/Mₙ = 3,92.

Beispiel 7: 215,0 g (0,75 Mol) 4,4'-Dichlordiphenylsulfon, 144,6 g (0,675 Mol) 4,4'-Dihydroxybenzophenon, 46,2 g (0,15 Mol) 2,2-Bis-(3-allyl-4-hydroxyphenyl)-propan und 124,3 g (0,90 Mol) Kaliumcarbonat wasserfrei werden 44 Stunden und 10 Minuten lang bei 145-161°C analog Beispiel 1 zur Reaktion gebracht und aufgearbeitet. Es werden 350,8 g (99,9 % der Theorie) eines bräunlichen, pulvrigen Polysulfons erhalten, das sich klar in Methylenchlorid löst.

| Elementaranalyse: | |
|---|---|
| berechnet | gefunden |
| 6,84 % S | 6,28 % S |

Gelchromatographie: Mₙ = 3133; M_{w} = 8995; M_{w}/Mₙ = 2,87.

Beispiel 8: Analog Beispiel 1 werden 19,01 g (0,0832 Mol) 2,2-Bis-(4-hydroxyphenyl)-propan, 11,67 g (0,0728 Mol) 2,7 Dihydroxynaphthalin, 22,46 g (0,0728 Mol) 2,2-Bis-(3-allyl-4-hydroxyphenyl)-propan und 62,78 g (0,2168 Mol) 4,4'-Dichlordiphenylsulfon in 350 ml Dimethylacetamid und 150 ml Xylol 22 Stunden und 15 Minuten lang bei 145-160°C umgesetzt und das Produkt gemäss Beispiel 1 isoliert. Man erhält 93,2 g (93,2 % der Theorie) eines Polysulfons mit folgenden analytischen Daten:

| Elementaranalyse: | |
|---|---|
| berechnet | gefunden |
| 6,91 % S | 7,01 % S |

Gelchromatographie: Mₙ = 6130; M_{w} = 29751; M_{w}/Mₙ = 4,854.

Beispiel 9: 26,51 g (0,1655 Mol) 2,7-Dihydroxynaphthalin, 23,82 g (0,0772 Mol) 2,2-Bis-(3-allyl-4-hydroxyphenyl)-propan, 66,55 g (0,2317 Mol) 4,4'-Dichlordiphenylsulfon und 38,43 g (0,2781 Mol) Kaliumcarbonat wasserfrei in 350 ml Dimethylacetamid und 150 ml Xylol werden gemäss Beispiel 8 zur Reaktion gebracht und analog aufgearbeitet. Man erhält 82,6 g (82,6 % der Theorie) eines grau gefärbten Polymers mit folgenden analytischen Daten:

| Elementaranalyse: | |
|---|---|
| berechnet | gefunden |
| 7,43 % S | 7,40 % S |

Gelchromatographie: Mₙ = 6708; M_{w} = 32119; M_{w}/Mₙ = 4,79.

Beispiel 10: 215,3 g (0,75 Mol) 4,4'-Dichlordiphenylsulfon, 158,2 g (0,693 Mol) 2,2-Bis-(4-hydroxyphenyl)-propan, 23,1 g (0,075 Mol) 2,2-Bis-(3-allyl-4-hydroxyphenyl)-propan und 124,4 g (0,90 Mol) Kaliumcarbonat in 1300 ml Dimethylacetamid und 500 ml Xylol werden 48 Stunden und 15 Minuten lang bei 142-157°C analog Beispiel 1 umgesetzt und aufgearbeitet. Es werden 333,4 g (97,5 % der Theorie) des gewünschten Polysulfons erhalten, das folgende Analysendaten aufweist:

| Elementaranalyse: | |
|---|---|
| berechnet | gefunden |
| 7,03 % S | 7,11 % S |

Gelchromatographie: Mₙ = 10009; M_{w} = 45979; M_{w}/Mₙ = 4,59.

Beispiel 11: 472,3 g (1,4049 Mol) Hexafluorbisphenol-A, 448,2 g (1,561 Mol) 4,4'-Dichlordiphenylsulfon, 96,2 g (0,3122 Mol) 2,2-Bis-(3-allyl-4-hydroxyphenyl)-propan und 258,8 g (1,873 Mol) Kaliumcarbonat wasserfrei werden in 2,5 l Dimethylacetamid und 1 l Xylol 26 Stunden lang bei 142-150°C gemäss Beispiel 1 umgesetzt und aufgearbeitet. Man erhält 849,6 g (99,6 % der Theorie) des gewünschten Polysulfons mit folgenden Analysedaten:

Gelchromatographie: Mₙ = 5423; M_{w} = 16008; M_{w}/Mₙ = 2,95.

### B) Anwendungsbeispiele

Beispiel I: 100 g Polysulfon (hergestellt nach Beispiel 1) und 15 g Bis-(4-maleinimidylphenyl)-methan werden mit einer automatischen Reibschale der Marke Pulverisette während 10 Minunten homogenisiert. Etwa 10 g dieses Pulvers werden auf ein eloxiertes Aluminiumblech gegeben und bei 200°C während 2 Minuten in der Laborpresse zu einem 0,5 mm dünnen Plättchen verpresst. Anschliessend wird je ein Viertel dieses Plättchens während 6 h bei 250°C, 6 h bei 280°C und 6 h bei 310°C polymerisiert. Die Eigenschaften des Polymeren findet man in Tabelle 1.

Beispiel II: 100 g Polysulfon (hergestellt nach Beispiel 2) und 25 g Bis-(4-maleinimidylphenyl)-methan werden, wie in Anwendungsbeispiel B1 beschrieben, verarbeitet und polymerisiert. Die Eigenschaften des Polymeren findet man in Tabelle 1.

**Tabelle 1**

| Von den Polymeren werden die Glasumwandlungstemperaturen durch thermomechanische Analyse (TMA) mit einem TA-3000-Gerät der Firma Mettler ermittelt und die Lösungsmittelbeständigkeit in Methylenchlorid bestimmt. | | | | | |
|---|---|---|---|---|---|
| Bei-spiel Nr. | Härtung | 2 Min. 200°C | 6h 250°C | 6h 280°C | 6h 310°C |
| | Test | | | | |
| B1) | T_{g}¹⁾onset [TMA, °C] | 115 | 182 | 189 | 192 |
| | T_{g}¹⁾ [TMA, °C] | 124 | 187 | 194 | 202 |
| | Aspekt | gelblich | rötlich | rotbraun | dunkel |
| | Beständigkeit in Methylenchlorid nach 10 Tagen | aufgelöst | gequollen | unlöslich | unlöslich |
| B2) | T_{g}¹⁾onset [TMA, °C] | 107 | 197 | 194 | 202 |
| | T_{g}¹⁾ [TMA, °C] | 114 | 212 | 208¹⁾ | 215¹⁾ |
| | Aspekt | gelblich | rötlich | rotbraun | dunkel |
| | Beständigkeit in Methylenchlorid nach 10 Tagen | aufgelöst | leicht gequollen | unlöslich | unlöslich |

| | | | | | |
|---|---|---|---|---|---|
| ¹⁾ T_{g}-Bestimmung mittels TMA: Aufzeichnung der Eindringtiefe eines Messfühlers als Funktion der Probentemperatur. T_{g}-Wert = Minimum der 1. Ableitung des Kurvenverlaufs. T_{g}-onset-Wert = Schnittpunkt der verlängerten Basislinie mit der Tangente an die Messkurve im Bereich des steilsten Anstiegs. | | | | | |

Beispiel III: 50 g des Copolymeren gemäss Beispiel 1 werden bei Raumtemperatur in 200 g Dichlormethan gelöst. Mit einer Rakel wird ein "quasi-unidirektionales" Kohlefasergewebe enthaltend 95 % Kohlefaser in Kettenrichtung und 5 % Glasfaser in Schussrichtung bei Raumtemperatur mit der Lösung imprägniert. Nach Verdunsten des Lösungsmittels (mindestens 24 Stunden bei Raumtemperatur) wird ein trockenes Prepreg erhalten.

Dreizehn Lagen dieses Prepregs werden übereinander geschichtet und in einer Presse bei ca. 210°C unter einem Druck von 7 bar zu einem Laminat verpresst. Nach einer Härtung während sechs Stunden bei 280°C wird ein Laminat mit den folgenden Eigenschaften erhalten:

| Fasergehalt: | 63,5 Gew.% |
|---|---|
| Interlaminare Scherfestigkeit ILS nach DIN 29971: | 80 MPa |
| Biegefestigkeit in Hauptfaserrichtung: | 1550 MPa |
| Biegefestigkeit quer zu Hauptfaserrichtung: | 102 MPa. |

Beispiel IV: Bei Verwendung von 50 g des Copolymeren gemäss Beispiel 2 und sonst gleicher Verarbeitung wird ein Laminat mit folgenden Eigenschaften erhalten:

| Fasergehalt: | 62,8 Gew.% |
|---|---|
| Interlaminare Scherfestigkeit ILS nach DIN 29971: | 80 MPa |
| Biegefestigkeit in Hauptfaserrichtung: | 1687 MPa |
| Biegefestigkeit quer zur Hauptfaserrichtung: | 115 MPa. |

## Patentansprüche (Patentansprüche für folgende(n) Vertragsstaat(en): CH, LI, DE, FR, GB, IT, NL, SE)

1. Copolyetherharze mit direkt an Phenylkerne gebundenen Endgruppen -OR¹ und 1 bis 50 Mol % an wiederkehrenden Struktureinheiten der Formel I und 99 bis 50 Mol % an wiederkehrenden Struktureinheiten der Formel II, wobei die Prozentangaben sich jeweils auf die Gesamtzahl an wiederkehrenden Stuktureinheiten pro Molekül beziehen 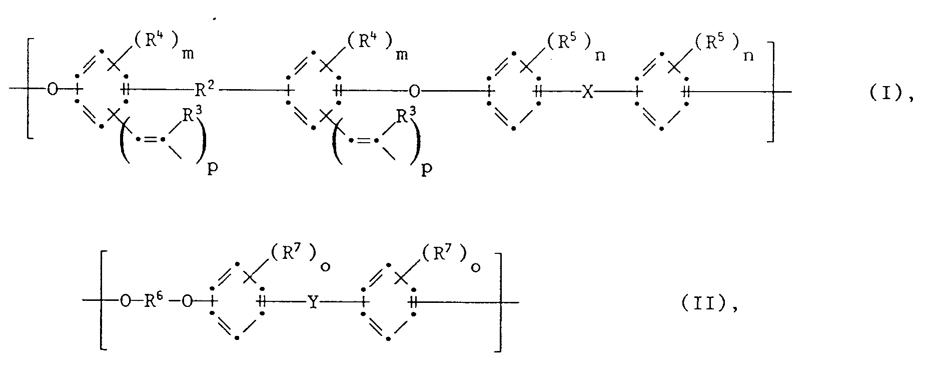 worin R¹ Wasserstoff ist oder einen Rest der Formel IV darstellt 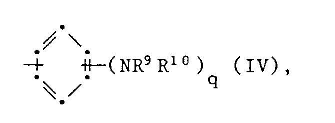 R² eine direkte C-C-Bindung ist oder eine Gruppe der Formeln -CᵣH₂ᵣ-, -O-, -S-, -CO- oder -SO₂- bedeutet,
r 1 bis 20 ist,
R³ Wasserstoff oder Methyl bedeutet,
R⁴ , R⁵ und R⁷ unabhängig voneinander C₁-C₄Alkyl, C₁-C₄Alkoxy oder Chlor oder Brom sind, m, n und o unabhängig voneinander 0, 1 oder 2 bedeuten, p 1 oder 2 ist,
R⁶ ein zweiwertiger unsubstituierter oder mit ein oder zwei C₁-C₄Alkyl-, C₁-C₄Alkoxygruppen oder Chlor- oder Bromatomen substituierter Rest eines Bisphenols nach dem Entfernen beider phenolischer Hydroxylgruppen ist,
X und Y unabhängig voneinander -CO- oder -SO₂- bedeuten,
R⁹ und R¹⁰ Wasserstoff sind und q 1 ist.

2. Copolyetherharze gemäss Anspruch 1, worin R⁶ ein Rest der Formeln X, XI oder XII ist 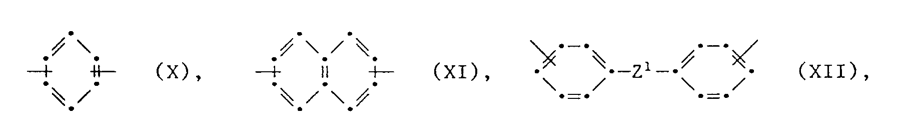 worin Z¹ eine direkte C-C-Bindung ist oder eine Gruppe der Formeln -CH₂-, -CHCH₃-, -C(CH₃)₂-, -CH(C₂H₅)-, -C(CH₃)(C₂H₅)-, -C(CF₃)₂-, -O-, -S-, -SO₂- oder -P(O)R¹⁷- ist, und R¹⁷ Methyl, Cyclohexyl oder Phenyl ist.

3. Copolyetherharze gemäss Anspruch 1, worin m, n und o 0 sind und p 1 bedeutet.

4. Copolyetherharze gemäss Anspruch 1, worin X und Y jeweils die gleiche Bedeutung besitzen.

5. Copolyetherharze gemäss Anspruch 1, bestehend aus 2 bis 30 Mol % an wiederkehrenden Struktureinheiten der Formel I und aus 98 bis 70 Mol % an wiederkehrenden Struktureinheiten der Formel II und mit einem mittleren Molekulargewicht (Zahlenmittel) von 2000 bis 30000.

6. Verfahren zur Herstellung der Copolyetherharze der Formel I gemäss Anspruch 1, worin R¹ Wasserstoff ist, dadurch gekennzeichnet, dass man Verbindungen der Formeln XV und/oder XVI und der Formeln XVII bis XIX in einem polaren, aprotischen Lösungsmittel in Gegenwart einer Base umsetzt 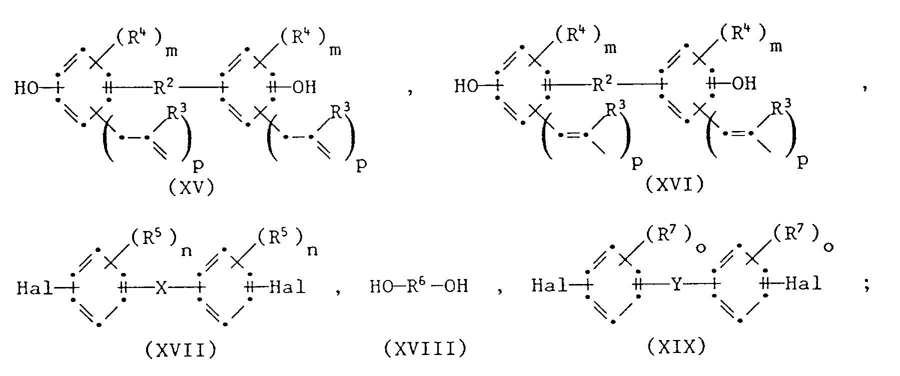 worin die Reste R² bis R⁷ , X und Y, sowie die Indizes m, n, o und p die in Anspruch 1 definierte Bedeutung besitzen, Hal, Fluor, Chlor, Brom oder Iod bedeutet, wobei die Mengenverhältnisse der Bisphenolverbindungen der Formeln XV, XVI und XVIII zu den Dihalogenverbindungen der Formeln XVII und XIX so gewählt werden, dass ein geringer stöchiometrischer Ueberschuss an Dihalogenverbindungen vorliegt, und wobei das molare Verhältnis der Verbindungen XV und XVII oder XVI und XVII zu den Verbindungen XVIII und XIX etwa 1:99 bis 1:1 beträgt und diese halogen-terminierten Verbindungen in einer anschliessenden Stufe mit einem Alkalimetallhydroxid umsetzt.

7. Verfahren zur Herstellung der Copolyetherharze der Formel I gemäss Anspruch 1, worin R¹ ein Rest der Formel IV ist, dadurch gekennzeichnet, dass man Verbindungen der Formeln XV und/oder XVI und der Formeln XVII bis XIX gemäss Anspruch 9 in einem polaren, aprotischen Lösungmittel umsetzt, wobei die Mengenverhältnisse der Bisphenolverbindungen der Formeln XV, XVI und XVIII zu den Dihalogenverbindungen der Formeln XVII und XIX so gewählt werden, dass ein geringer stöchiometrischer Ueberschuss an Dihalogenverbindungen vorliegt, und wobei das molare Verhältnis der Verbindungen XV und XVII oder XVI und XVII zu den Verbindungen XVIII und XIX etwa 1:99 bis 1:1 beträgt und diese Verbindungen gleichzeitig oder in einer daran anschliessenden Stufe mit einem Monophenol der Formel XXI umsetzt 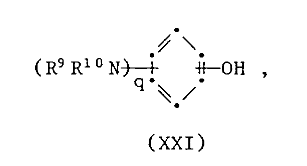 worin die Reste R⁹ und R¹⁰ sowie der Index q die in Anspruch 1 definierte Bedeutung besitzen, so dass die entstehenden dihalogenterminierten Polymeren mit besagten Monophenolen verkappt werden.

8. Gehärtete Produkte erhältlich durch Erhitzen oder durch Bestrahlung mit aktinischer Strahlung der Copolyetherharze gemäss Anspruch 1.

## Patentansprüche (Patentansprüche für folgende(n) Vertragsstaat(en): ES)

1. Verfahren zur Herstellung von Copolyetherharzen mit direkt an Phenylkerne gebundenen Endgruppen -OR¹ und 1 bis 50 Mol % an wiederkehrenden Struktureinheiten der Formel I und 99 bis 50 Mol % an wiederkehrenden Struktureinheiten der Formel II, wobei die Prozentangaben sich jeweils auf die Gesamtzahl an wiederkehrenden Stuktureinheiten pro Molekül beziehen 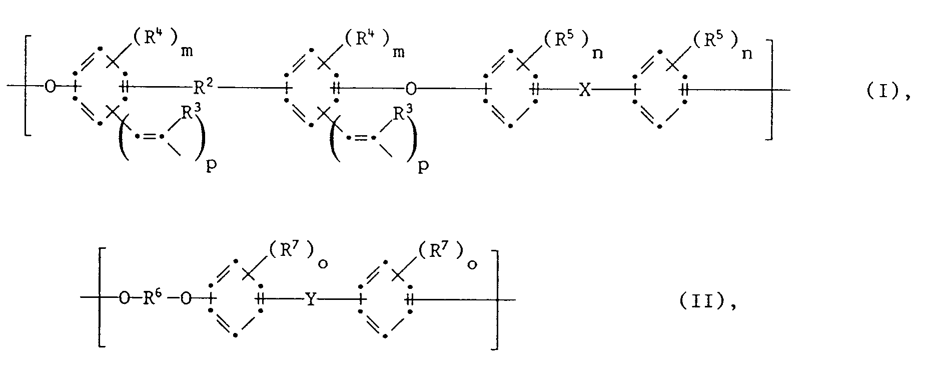 worin R¹ Wasserstoff ist,
R² eine direkte C-C-Bindung ist oder eine Gruppe der Formeln -CᵣH₂ᵣ-, -O-, -S-, -CO- oder -SO₂- bedeutet,
r 1 bis 20 ist,
R³ Wasserstoff oder Methyl bedeutet,
R⁴, R⁵ und R⁷ unabhängig voneinander C₁-C₄Alkyl, C₁-C₄Alkoxy oder Chlor oder Brom sind, m, n und o unabhängig voneinander 0, 1 oder 2 bedeuten, p 1 oder 2 ist,
R⁶ ein zweiwertiger unsubstituierter oder mit ein oder zwei C₁-C₄Alkyl-, C₁-C₄Alkoxygruppen oder Chlor- oder Bromatomen substituierter Rest eines Bisphenols nach dem Entfernen beider phenolischer Hydroxylgruppen ist,
R¹¹ Wasserstoff oder Methyl bedeutet,
X und Y unabhängig voneinander -CO- oder -SO₂- bedeuten,
dadurch gekennzeichnet, dass man Verbindungen der Formeln XV und/oder XVI und der Formeln XVII bis XIX in einem polaren, aprotischen Lösungsmittel in Gegenwart einer Base umsetzt 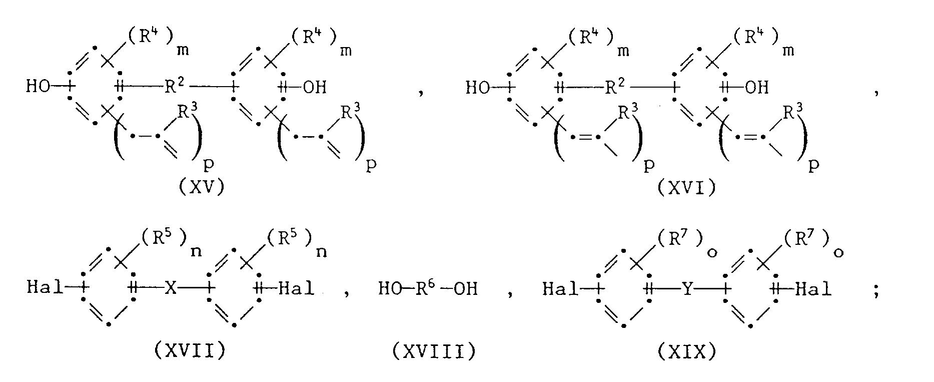 worin die Reste R² bis R⁷, X und Y, sowie die Indizes m, n, o und p die oben definierte Bedeutung besitzen, Hal, Fluor, Chlor, Brom oder Iod bedeutet, wobei die Mengenverhältnisse der Bisphenolverbindungen der Formeln XV, XVI und XVIII zu den Dihalogenverbindungen der Formeln XVII und XIX so gewählt werden, dass ein geringer stöchiometrischer Ueberschuss an Dihalogenverbindungen vorliegt, und wobei das molare Verhältnis der Verbindungen XV und XVII oder XVI und XVII zu den Verbindungen XVIII und XIX etwa 1:99 bis 1:1 beträgt, und diese halogen-terminierten Verbindungen in einer anschliessenden Stufe mit einem Alkalimetallhydroxid umsetzt.

2. Verfahren zur Herstellung von Copolyetherharzen mit direkt an Phenylkerne gebundenen Endgruppen -OR¹ und 1 bis 50 Mol % an wiederkehrenden Struktureinheiten der Formel I gemäss Anspruch 1 und 99 bis 50 Mol % an wiederkehrende Struktureinheiten der Formel II gemäss Anspruch 1, wobei die Prozentangaben sich jeweils auf die Gesamtzahl der an wiederkehrenden Struktureinheiten pro Molekül beziehen und worin R¹ ein Rest der Formel IV ist 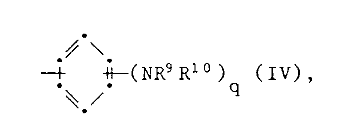 worin
R⁹ und R¹⁰ Wasserstoff sind, q 1 ist,
dadurch gekennzeichnet, dass man Verbindungen der Formeln XV und/oder XVI und der Formeln XVII bis XIX gemäss Anspruch 1 in einem polaren, aprotischen Lösungmittel umsetzt, wobei die Mengenverhältnisse der Bisphenolverbindungen der Formeln XV, XVI und XVIII zu den Dihalogenverbindungen der Formeln XVII und XIX so gewählt werden, dass ein geringer stöchiometrischer Ueberschuss an Dihalogenverbindungen vorliegt, und wobei das molare Verhältnis der Verbindungen XV und XVII oder XVI und XVII zu den Verbindungen XVIII und XIX etwa 1:99 bis 1:1 beträgt und diese Verbindungen gleichzeitig oder in einer daran anschliessenden Stufe mit einem Monophenol der Formel XXI umsetzt 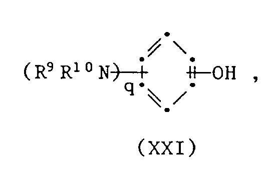 worin die Reste R⁹ und R¹⁰ sowie der Index q die oben definierte Bedeutung besitzen, so dass die entstehenden dihalogen-terminierten Polymeren mit besagten Monophenolen verkappt werden.

3. Verfahren zur Herstellung von Copolyetherharzen gemäss Anspruch 1 oder 2, dadurch gekennzeichnet, dass R⁶ ein Rest der Formeln X, XI oder XII ist 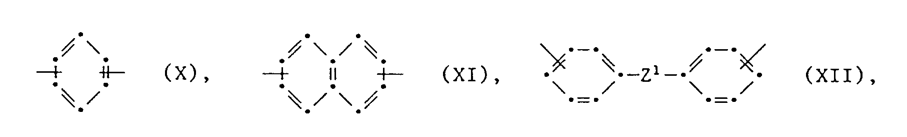 worin Z¹ eine direkte C-C-Bindung ist oder eine Gruppe der Formeln -CH₂-, -CHCH₃-, -C(CH₃)₂-, -CH(C₂H₅)-, -C(CH₃)(C₂H₅)-, -C(CF₃)₂-, -O-, -S-, -SO₂- oder -P(O)R¹⁷- ist, und R¹⁷ Methyl, Cyclohexyl oder Phenyl ist.

4. Verfahren gemäss Anspruch 1 oder 2, worin m, n und o 0 sind und p 1 bedeutet.

5. Verfahren gemäss Anspruch 1 oder 2, worin X und Y jeweils die gleiche Bedeutung besitzen.

6. Verfahren gemäss Anspruch 1 oder 2, worin 2 bis 30 Mol % an Verbindungen der Formeln XV und XVII oder XVI und XVII und 98 bis 70 Mol % an Verbindungen der Formeln XVII und XIX zu einem Copolyetherharz mit einem mittleren Molekulargewicht (Zahlenmittel) von 2000 bis 30000 kondensiert werden.

7. Verfahren zur Herstellung gehärteter Produkte, dadurch gekennzeichnet, dass man ein Copolyetherharz erhältlich gemäss Anspruch 1 oder 2 durch Erhitzen oder durch Bestrahlung mit aktinischer Strahlung härtet.

## Claims (Claims for the following Contracting State(s): CH, LI, DE, FR, GB, IT, NL, SE)

1. A copolyether resin having end groups -OR¹ linked direct to phenyl nuclei and comprising 1 to 50 mol% of repeating structural units of formula I and 99 to 50 mol% of repeating structural units of formula II, the percentages being based in each case on the total number of repeating structural units in each molecule, 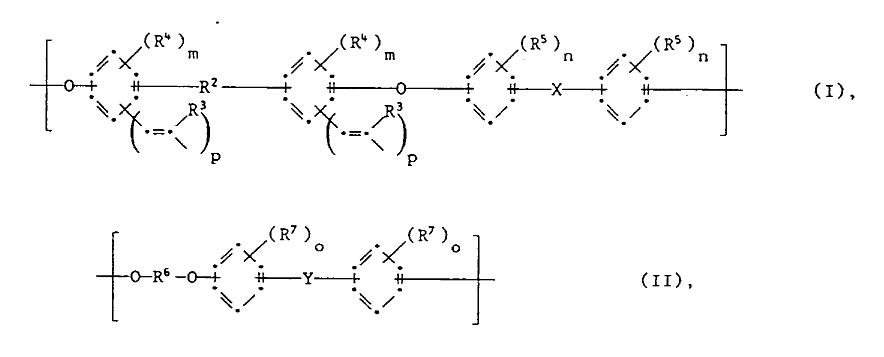 in which R¹ is hydrogen or a radical of formula IV 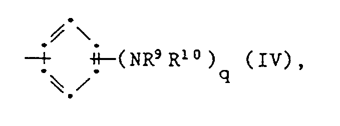 R² is a direct C-C bond or a group of formula -CᵣH₂ᵣ-, -O-, -S-, -CO- or -SO₂-,
r is 1 to 20,
R³ is hydrogen or methyl,
R⁴, R⁵ and R⁷ are each independently of one another C₁-C₄alkyl,
C₁-C₄alkoxy or chloro or bromo,
m, n and o are each independently of one another 0, 1 or 2,
p is 1 or 2,
R⁶ is a divalent radical of a bisphenol after removal of both phenolic hydroxyl groups, which radical is unsubstituted or substituted by one or two C₁-C₄alkyl or C₁-C₄alkoxy groups or chlorine or bromine atoms, X and Y are each independently of one another -CO- or -SO₂-,
R⁹ or R¹⁰ are hydrogen, and
q is 1.

2. A copolyether resin according to claim 1, wherein R⁶ is a radical of formula X, XI or XII 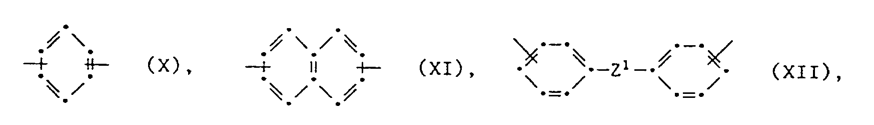 wherein Z¹ is a direct C-C bond or a group of formula -CH₂-, -CHCH₃-, -C(CH₃)₂-, -CH(C₂H₅)-, -C(CH₃)(C₂H₅)-, -C(CF₃)₂-, -O-, -S-, -SO₂- or -P(O)R¹⁷- and R¹⁷ is methyl, cyclohexyl or phenyl.

3. A copolyether resin according to claim 1, wherein m, n and o are 0 and p is 1.

4. A copolyether resin according to claim 1, wherein X and Y each have the same meaning.

5. A copolyether resin according to claim 1, comprising 2 to 30 mol% of repeating structural units of formula I and 98 to 70 mol% of repeating structural units of formula II and having an average molecular weight (number average) of 2000 to 30 000.

6. A process for the preparation of a copolyether resin of formula I according to claim 1, wherein R¹ is hydrogen, which comprises reacting compounds of formula XV and/or XVI and compounds of formulae XVII to XIX in a polar aprotic solvent and in the presence of a base 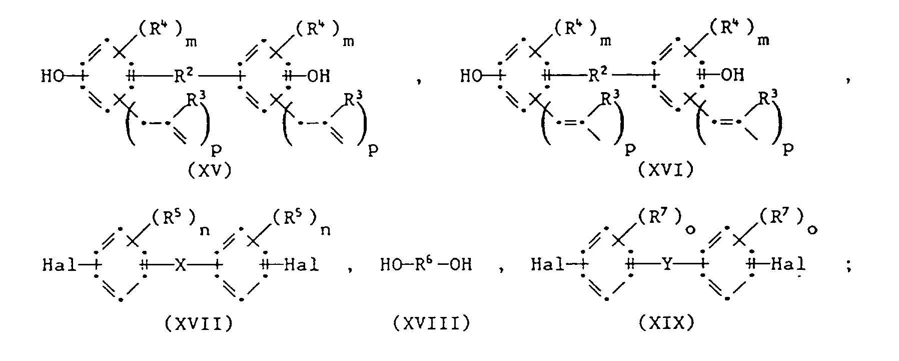 in which formulae the radicals R² to R⁷, X and Y and the indices m, n, o and p are as defined in claim 1, Hal is fluoro, chloro, bromo or iodo, the ratios of the bisphenol compounds of formulae XV, XVI and XVIII to the dihalo compounds of formulae XVII and XIX being chosen such that the dihalo compounds are present in a small stoichiometric excess, and the molar ratio of the compounds XV and XVII or XVI and XVII to the compounds XVIII and XIX being about 1:99 to 1:1, and reacting these halogen-terminated compounds in a subsequent step with an alkali metal hydroxide.

7. A process for the preparation of a copolyether resin of formula I according to claim 1, wherein R¹ is a radical of formula IV, which comprises reacting compounds of formulae XV and/or XVI and compounds of formulae XVII to XIX according to claim 6 in a polar aprotic solvent, the ratios of the bisphenol compounds of formulae XV, XVI and XVIII to the dihalo compounds of formulae XVII and XIX being chosen such that the dihalo compounds are present in a small stoichiometric excess, and the molar ratio of the compounds XV and XVII or XVI and XVII to the compounds XVIII and XIX being about 1:99 to 1:1, and reacting these compounds simultaneously or in a subsequent step with a monophenol of formula XXI 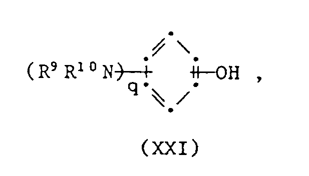 wherein the radicals R⁹ and R¹⁰ and the index g are as defined in claim 1, so that the resultant dihalo-terminated polymer is capped with said monophenol.

8. A cured product obtainable by heating or by irradiating with actinic radiation a copolyether resin according to claim 1.

## Claims (Claims for the following Contracting State(s): ES)

1. A process for the preparation of a copolyether resin having end groups -OR¹ linked direct to phenyl nuclei and comprising 1 to 50 mol% of repeating structural units of formula I and 99 to 50 mol% of repeating structural units of formula II, the percentages being based in each case on the total number of repeating structural units in each molecule, 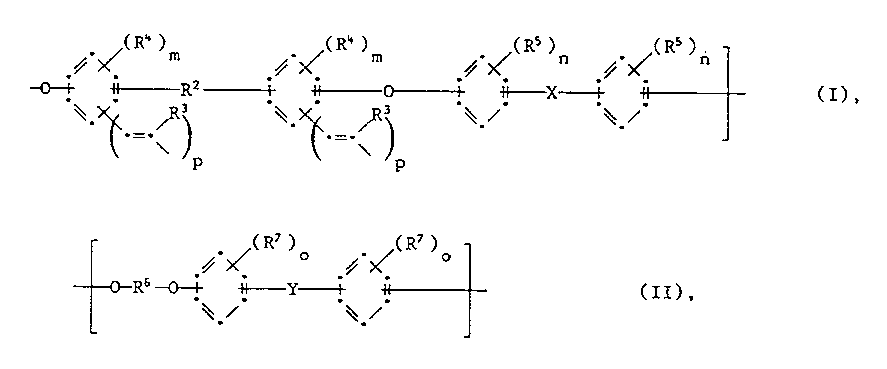 in which R¹ is hydrogen,
R² is a direct C-C bond or a group of formula -CᵣH₂ᵣ-, -O-, -S-, -CO- or -SO₂-,
r is 1 to 20,
R³ is hydrogen or methyl,
R⁴, R⁵ and R⁷ are each independently of one another C₁-C₄alkyl,
C₁-C₄alkoxy or chloro or bromo,
m, n and o are each independently of one another 0, 1 or 2,
p is 1 or 2,
R⁶ is a divalent radical of a bisphenol after removal of both phenolic hydroxyl groups, which radical is unsubstituted or substituted by one or two C₁-C₄alkyl or C₁-C₄alkoxy groups or chlorine or bromine atoms,
X and Y are each independently of one another -CO- or -SO₂-, which comprises reacting compounds of formula XV and/or XVI and compounds of formulae XVII to XIX in a polar aprotic solvent and in the presence of a base 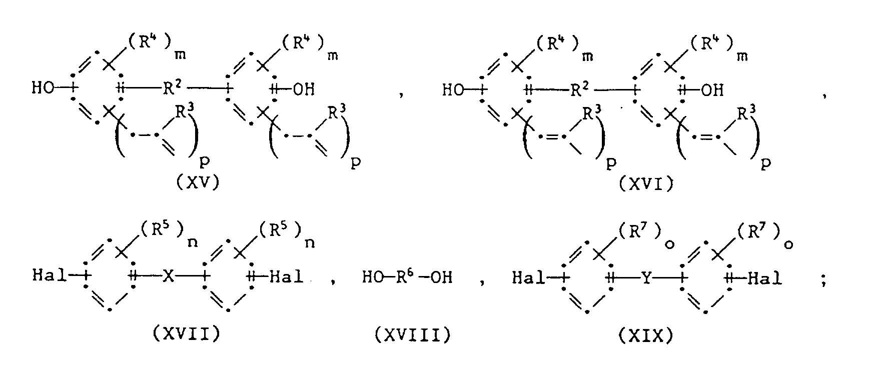 in which formulae the radicals R² to R⁷, X and Y and the indices m, n, o and p are as defined above, Hal is fluoro, chloro, bromo or iodo, the ratios of the bisphenol compounds of formulae XV, XVI and XVIII to the dihalo compounds of formulae XVII and XIX being chosen such that the dihalo compounds are present in a small stoichiometric excess, and the molar ratio of the compounds XV and XVII or XVI and XVII to the compounds XVIII and XIX being about 1:99 to 1:1, and reacting these halogen-terminated compounds in a subsequent step with an alkali metal hydroxide.

2. A process for the preparation of a copolyether resin having end groups -OR¹ linked direct to phenyl nuclei and comprising 1 to 50 mol% of repeating structural units of formula I according to claim 1 and 99 to 50 mol % of repeating structural units of formula II according to claim 1, the percentages being based in each case on the total number of repeating structural units in each molecule, and wherein R¹ is a radical of formula IV 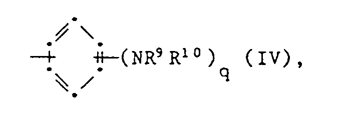 in which R⁹ and R¹⁰ are hydrogen and q is 1, which comprises reacting compounds of formulae XV and/or XVI and compounds of formulae XVII to XIX according to claim 1 in a polar aprotic solvent, the ratios of the bisphenol compounds of formulae XV, XVI and XVIII to the dihalo compounds of formulae XVII and XIX being chosen such that the dihalo compounds are present in a small stoichiometric excess, and the molar ratio of the compounds XV and XVII or XVI and XVII to the compounds XVIII and XIX being about 1:99 to 1:1, and reacting these compounds simultaneously or in a subsequent step with a monophenol of formula XXI 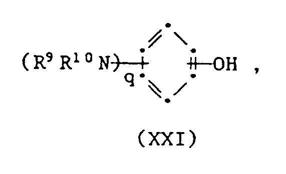 wherein the radicals R⁹ and R¹⁰ and the index q are as defined above, so that the resultant dihalo-terminated polymer is capped with said monophenol.

3. A process for the preparation of a copolyether resin according to claim 1 or 2, wherein R⁶ is a radical of formula X, XI or XII 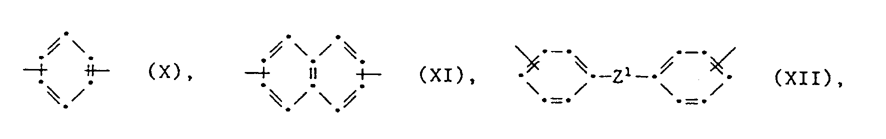 wherein Z¹ is a direct C-C bond or a group of formula -CH₂-, -CHCH₃-, -C(CH₃)₂-, -CH(C₂H₅)-, C(CH₃)(C₂H₅)-, -C(CF₃)₂-, -O-, -S-, -SO₂- or -P(O)R¹⁷- and R¹⁷ is methyl, cyclohexyl or phenyl.

4. A process according to claim 1 or 2, wherein m, n and o are 0 and p is 1.

5. A process according to claim 1 or 2, wherein X and Y each have the same meaning.

6. A process according to claim 1 or 2, which comprises condensing 2 to 30 mol% of compounds of formulae XV and XVII or XVI and XVII with 98 to 70 mol% of compounds of formulae XVII and XIX to give a copolyether resin having an average molecular weight (number average) of 2000 to 30 000.

7. A process for the production of cured products, which comprises curing a copolyether resin obtainable according to claim 1 or 2 by heating or by irradiation with actinic radiation.

## Revendications (Revendications pour l'(les) Etat(s) contractant(s) suivant(s): CH, LI, DE, FR, GB, IT, NL, SE)

1. Résines copolyéthers comportant des groupes terminaux -OR¹ liés directement aux noyaux phényle et ayant une teneur de 1 à 50 % molaires en unités de structure récurrentes de formule I et de 99 à 50 % molaires en unités de structure récurrentes de formule II, les indications en pourcentages étant chaque fois relatives au nombre total d'unités de structure récurrentes par molécule, 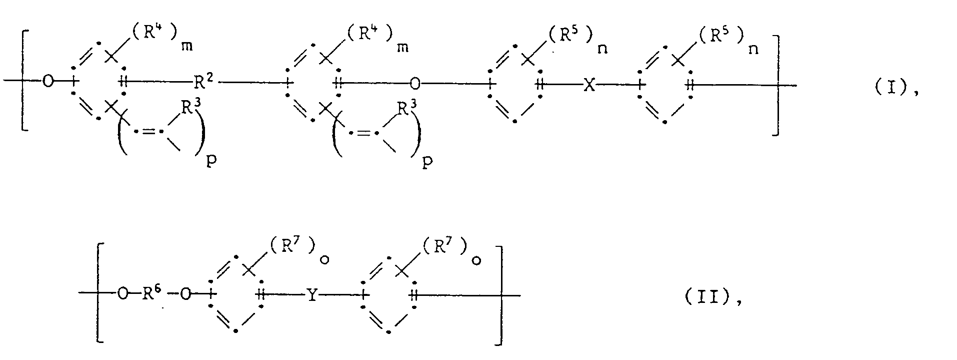 où R¹ représente l'hydrogène ou un radical de formule IV 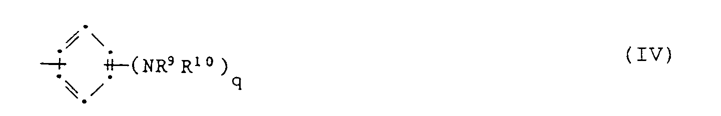 R² représente une liaison directe C-C ou un groupe de formules -CᵣH₂ᵣ-, -O-, -S-, -CO- ou -SO₂-,
r va de 1 à 20,
R³ représente l'hydrogène ou le méthyle,
R⁴, R⁵ et R⁷, indépendamment l'un de l'autre, représentent les alkyle en C₁-C₄, alcoxy en C₁-C₄ ou chlore ou brome, m, n et o indépendamment l'un de l'autre signifient 0, 1 ou 2, p vaut 1 ou 2,
R⁶ représente un radical bivalent d'un bisphénol non substitué ou substitué par un ou deux groupes alkyle en C₁-C₄, alcoxy en C₁-C₄ ou atome de chlore ou de brome, après l'élimination des groupes hydroxyle phénoliques,
X et Y indépendamment l'un de l'autre représentent -CO- ou -SO₂-,
R⁹ et R¹⁰ représentent l'hydrogène et q vaut 1.

2. Résines copolyéthers selon la revendication 1, où R⁶ représente un radical de formules X, XI ou XII 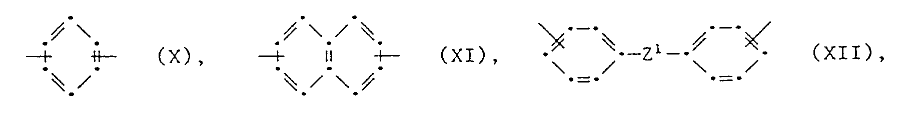 où Z¹ représente une liaison directe C-C ou un groupe de formules -CH₂-, -CHCH₃-, -C(CH₃)₂-, -CH(C₂H₅)-, -C(CH₃)(C₂H₅)-, -C(CF₃)₂-, -O-, -S-, -SO₂-, ou -P(O)R¹⁷-, et R¹⁷ représente le méthyle, le cyclohexyle ou le phényle.

3. Résines copolyéthers selon la revendication 1, où m, n et o représentent 0 et p vaut 1.

4. Résines copolyéthers selon la revendication 1, où X et Y ont chaque fois la même signification.

5. Résines copolyéthers selon la revendication 1, composées de 2 à 30 % molaires d'unités de structures récurrentes de formule I et de 98 à 70 % molaires d'unités de structures récurrentes de formule II et ayant un poids moléculaire moyen (moyenne en nombre) de 2000 à 30000.

6. Procédé pour la préparation de résines copolyéthers de formule I selon la revendication 1, où R¹ représente l'hydrogène, caractérisé en ce qu'on fait réagir des composés de formules XV et/ou XVI et de formules XVII à XIX dans un solvant aprotique polaire en présence d'une base, 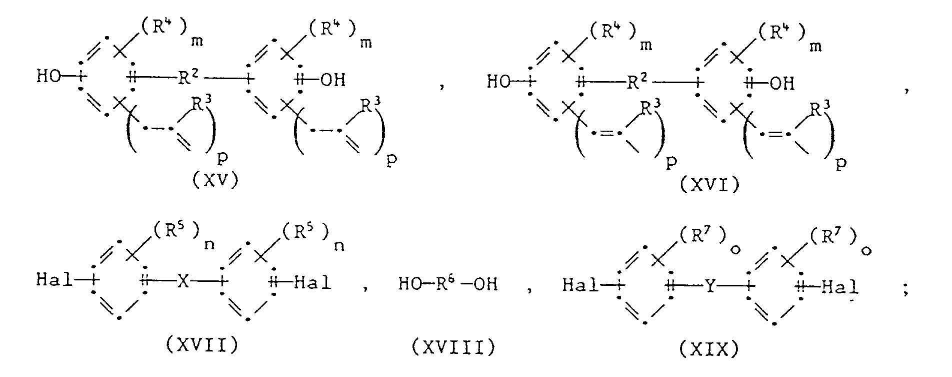 où les radicaux R² à R⁷, X et Y, ainsi que les indices m, n, o et p ont la signification définie dans la revendication 1, Hal représente les fluor, chlore, brome ou iode, les rapports quantitatifs des composés de bisphénol de formules XV, XVI et XVIII aux composés dihalogénés de formules XVII et XIX sont choisis de telle façon que les composés dihalogénés soient présents dans un faible excès stoechiométrique, et le rapport molaire des composés XV et XVII ou XVI et XVII par rapport aux composés XVIII et XIX étant d'environ 1:99 à 1:1, et on fait réagir ces composés à groupes halogène terminaux dans une étape réactionnelle ultérieure avec un hydroxyde de métal alcalin.

7. Procédé pour la préparation des résines copolyéthers de formule I selon la revendication 1, où R¹ représente un radical de formule IV, caractérisé en ce qu'on fait réagir des composés de formules XV et/ou XVI et de formules XVII à XIX selon la revendication 9 dans un solvant aprotique polaire, les rapports quantitatifs des composés de bisphénol de formules XV, XVI et XVIII aux composés dihalogénés de formules XVII et XIX sont choisis de telle façon que les composés dihalogénés soient présents dans un faible excès stoechiométrique, et le rapport molaire des composés XV et XVII, ou XVI et XVII, aux composés XVIII et XIX soit d'environ 1:99 à 1:1 et on fait réagir ces composés simultanément ou dans une étape ultérieure avec des monophénols de formule XXI 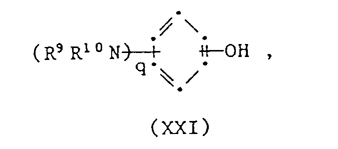 où les radicaux R⁹ et R¹⁰ ainsi que l'indice q ont les significations données dans la revendication 1, de façon que les polymères aux groupes dihalogène terminaux formés sont bloqués par lesdits monophénols.

8. Produits durcis que l'on peut obtenir par chauffage ou par irradiation par un rayonnement actinique des résines copolyéthers selon la revendication 1.

## Revendications (Revendications pour l'(les) Etat(s) contractant(s) suivant(s): ES)

1. Procédé de préparation de résines copolyéthers comportant des groupes terminaux -OR¹ liés directement aux cycles phényle et ayant une teneur de 1 à 50 % molaires en unités de structure récurrentes de formule I, et de 99 à 50 % molaires en unités de structure récurrentes de formule II, les indications en pourcentages étant chaque fois relatives au nombre total d'unités de structure récurrentes par molécule, 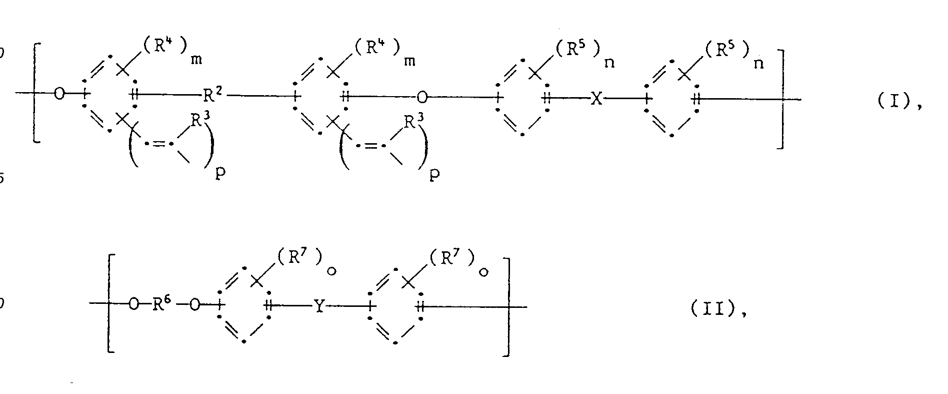 où R¹ représente l'hydrogène
R² représente une liaison directe C-C ou un groupe de formules -CᵣH₂ᵣ-, -O-, -S-, -CO- ou -SO₂-,
r va de 1 à 20,
R³ représente l'hydrogène ou le méthyle,
R⁴, R⁵ et R⁷, indépendamment l'un de l'autre, représentent un alkyle en C₁-C₄, un alcoxy en C₁-C₄ ou le chlore ou le brome, m, n et o indépendamment l'un de l'autre signifient 0, 1 ou 2, p vaut 1 ou 2,
R⁶ représente un radical bivalent d'un bisphénol non substitué ou substitué par un ou deux groupes alkyle en C₁-C₄, alcoxy en C₁-C₄ ou atome de chlore ou de brome, après l'élimination des groupes hydroxyle phénoliques,
R¹¹ représente l'hydrogène ou le méthyle
X et Y indépendamment l'un de l'autre représentent -CO- ou -SO₂-,
caractérisé en ce qu'on fait réagir des composés de formules XV et/ou XVI et de formules XVII à XIX dans un solvant aprotique, polaire, en présence d'une base 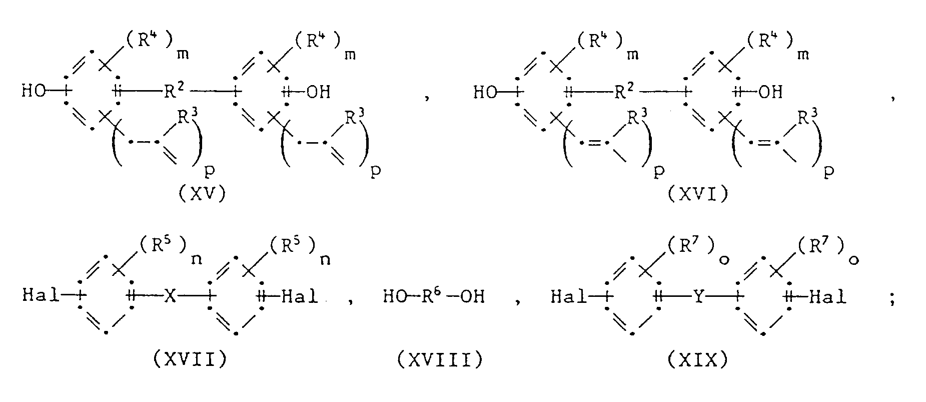 où les radicaux R² à R⁷, X et Y, ainsi que les indices m, n, o et p ont la signification définie ci-dessus, Hal représente les fluor, chlore, brome ou iode, les rapports quantitatifs des composés de bisphénol de formules XV, XVI et XVIII aux composés dihalogénés de formules XVII et XIX sont choisis de telle façon que les composés dihalogénés soient présents en faible excès stoechiométrique, et le rapport molaire des composés XV et XVII, ou XVI et XVII, par rapport aux composés XVIII et XIX étant d'environ 1:99 à 1:1, et on fait réagir ces composés à groupes halogène terminaux dans une étape réactionnelle ultérieure avec un hydroxyde de métal alcalin.

2. Procédé pour la préparation de résines copolyéthers avec des groupes terminaux -OR¹ liés directement aux noyaux phényle et ayant une teneur de 1 à 50 % molaires en unités de structure récurrentes de formule I selon la revendication 1, et de 99 à 50 % molaires en unités de structure récurrentes de formule II selon la revendication 1, les pourcentages indiqués étant relatifs chaque fois au nombre total des unités de structure récurrentes par molécule et où R¹ représente un radical de formule IV 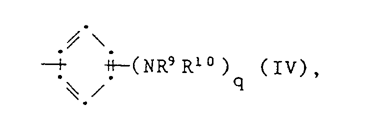 où R⁹ et R¹⁰ représentent l'hydrogène, q vaut 1, caractérisé en ce qu'on fait réagir des composés de formules XV et/ou XVI et de formules XVII à XIX selon la revendication 1, dans un solvant aprotique, polaire, les rapports quantitatifs des composés de bisphénol de formules XV, XVI et XVIII aux composés dihalogénés de formules XVII et XIX sont choisis de telle façon que les composés dihalogénés soient présents dans un faible excès stoechiométrique et le rapport molaire des composés XV et XVII, ou XVI et XVII, aux composés XVIII et XIX étant d'environ 1:99 à 1:1, et on fait réagir ces composés simultanément ou dans une étape consécutive avec des monophénols de formule XXI 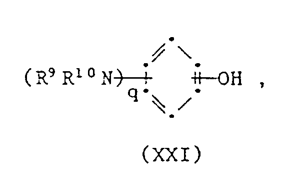 où les radicaux R⁹ et R¹⁰ ainsi que l'indice q ont les significations données dans la revendication 1, de sorte que les polymères aux groupes dihalogéno terminaux formés soient bloqués par lesdits monophénols.

3. Procédé pour la préparation de résines copolyéthers selon la revendication 1 ou 2, caractérisé en ce que R⁶ représente un radical de formules X, XI ou XII 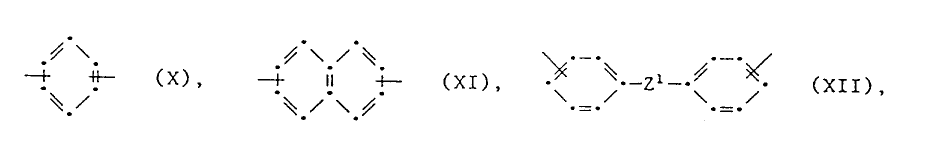 où Z¹ représente une liaison directe C-C ou un groupe de formules -CH₂-, -CHCH₃-, -C(CH₃)₂-, -CH(C₂H₅)-, -C(CH₃)(C₂H₅)-, -C(CF₃)₂-, -O-, -S-, -SO₂-, ou -P(O)R¹⁷-, et R¹⁷ représente le méthyle, le cyclohexyle ou le phényle.

4. Procédé selon la revendication 1 ou 2, où m, n et o représentent 0 et p vaut 1.

5. Procédé selon la revendication 1 ou 2, selon lequel X et Y ont chaque fois la même signification.

6. Procédé selon la revendication 1 ou 2, selon lequel on condense de 2 à 30 % molaires de composés de formules XV et XVII ou XVI et XVII, et de 98 à 70 % molaires de composés de formules XVII et XIX pour obtenir une résine copolyéther ayant un poids moléculaire moyen (moyenne en nombre) de 2000 à 30000.

7. Procédé pour la préparation de produits durcis, caractérisé en ce qu'on fait durcir une résine copolyéther que l'on peut obtenir selon la revendication 1 ou 2, par chauffage ou par irradiation par un rayonnement actinique.
